# EUROPEAN PATENT SPECIFICATION

(11) **EP 3 383 109 B1**
(45) Date of publication and mention of the grant of the patent: **27.05.2020**
(21) Application number: 16877499.0
(22) Date of filing: 07.11.2016
(51) Int. Cl.: H04W 72/12, H04L 5/00

(54) **RESOURCE INDICATION METHOD AND APPARATUS BASED ON MULTIPLE TIME PERIODS**
RESSOURCENANZEIGEVERFAHREN UND VORRICHTUNG AUF DER GRUNDLAGE VON MEHREREN ZEITRÄUMEN
PROCÉDÉ ET APPAREIL D'INDICATION DE RESSOURCE BASÉS SUR DE MULTIPLES PÉRIODES DE TEMPS

(30) Priority: 25.12.2015 CN 201510995447
(43) Date of publication of application: 03.10.2018
(73) Proprietor: Huawei Technologies Co., Ltd., Longgang District Shenzhen, Guangdong 518129 (CN)
(72) Inventor: LUO, Jun, Shenzhen Guangdong 518129 (CN); ZHANG, Jiayin, Shenzhen Guangdong 518129 (CN); LIN, Yingpei, Shenzhen Guangdong 518129 (CN)
(74) Representative: Goddar, Heinz J.
(86) International application number: PCT/CN2016/104895
(87) International publication number: WO 2017/107688

(56) References cited:
- WO-A1-2015/031442
- WO-A1-2015/031442
- CN-A- 101 268 660
- CN-A- 103 476 130
- CN-A- 103 563 457
- CN-A- 104 321 998
- CN-A- 106 060 875
- CN-A- 106 060 939
- US-A1- 2015 117 368
- Alfred Asterjadhi Asterjadhi ET AL: "Scheduled Trigger frames - Follow up", , 8 November 2015 (2015-11-08), XP055379675, IEEE Mentor Public Documentation Portal Retrieved from the Internet: URL:https://mentor.ieee.org/802.11/dcn/15/ 11-15-1319-00-00ax-scheduled-trigger-frame s-follow-up.pptx [retrieved on 2017-06-08]
- Robert Stacey: "IEEE P802.11 - Wireless LANs: Specification Framework for TGax", IEEE 802.11-15/0132r13, 7 December 2015 (2015-12-07), XP055350345, Retrieved from the Internet: URL:https://mentor.ieee.org/802.11/dcn/15/ 11-15-0132-13-00ax-spec-framework.docx [retrieved on 2017-02-28]
- SIMONE MERLIN (QUALCOMM): "Trigger Frame Content ; 11-15-1344-01-00ax-trigger-frame-content", IEEE DRAFT; 11-15-1344-01-00AX-TRIGGER-FRAME-CONTENT, IEEE-SA MENTOR, PISCATAWAY, NJ USA, vol. 802.11ax, no. 1, 11 November 2015 (2015-11-11), pages 1-19, XP068099320, [retrieved on 2015-11-11]
- PARK, M: 'IEEE 802.11ac: Dynamic Bandwidth Channel' IEEE PROCEEDINGS 29 July 2011, XP031908841

## Description

### TECHNICAL FIELD

The present invention pertains to the field of communications technologies, and in particular, to a multi-time-segment-based resource indication method and apparatus, as captured in the appended claims.

### BACKGROUND

An existing wireless local area network (English: Wireless Local Area Network, WLAN for short) standard based on an orthogonal frequency division multiplexing (English: Orthogonal Frequency Division Multiplexing, OFDM for short) technology includes gradually evolved releases such as 802.11a, 802.11n, and 802.11ac. Currently, the institute of electrical and electronics engineers (English: Institute of Electrical and Electronics Engineers, IEEE for short) 802.11 standard organization has started standardization work of a new-generation WLAN standard 802.11ax that is referred to as an high efficiency WLAN (high-efficiency wireless local area network, HEW for short). An orthogonal frequency division multiple access (Orthogonal Frequency Division Multiple Access, OFDMA for short) technology is introduced, so that the 802.11ax can further improve transmission performance of the WLAN in an intensive user scenario.

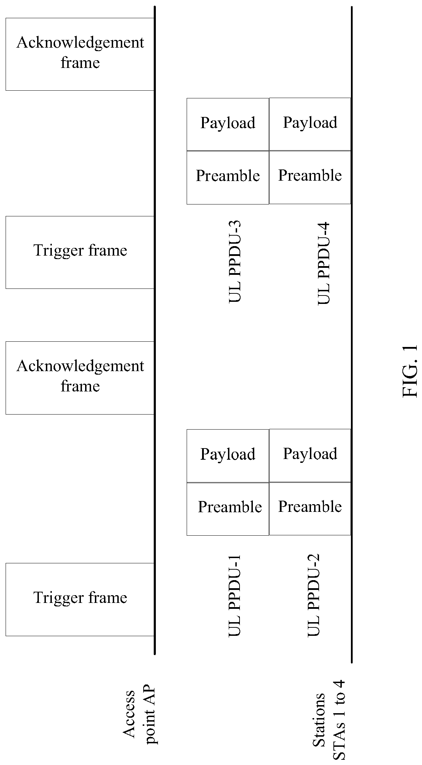

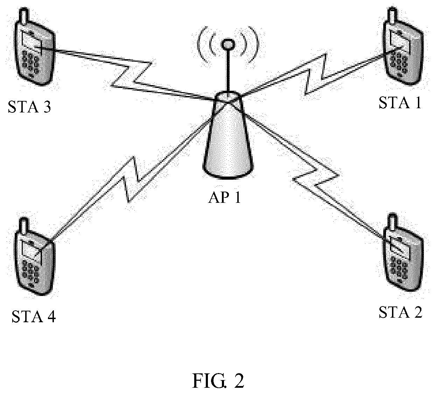

To better understand an uplink data transmission process in the 802.11ax, FIG. 1 shows a procedure of performing uplink data transmission between an access point and a station in the prior art, including performing data transmission between one access point AP and four stations STAs. First, the access point sends a trigger frame. The trigger frame carries identifier information and resource indication information of a station that needs to be scheduled. The resource indication information includes a sending time, frequency domain information, spatial flow information, and a modulation and coding scheme MCS of uplink data. The trigger frame includes identifier information and resource indication information of a STA 1 and a STA 2 that need to be scheduled. Then, a station parses the trigger frame after receiving the trigger frame. If identifier information of the station matches identifier information of a scheduled station in the trigger frame, the station reads, from the trigger frame, resource indication information allocated by the access point to the station. As shown in FIG. 2, the STA 1 and the STA 2 are scheduled by the AP, and send uplink data based on the resource indication information. Finally, the access point sends an acknowledgement frame to acknowledge that the STA 1 and the STA 2 successfully perform data transmission. It should be noted that, the AP schedules a STA 3 and a STA 4 by using a trigger frame in a same manner of scheduling the STA 1 and the STA 2.

A large amount of uplink data is small-sized traffic, to be specific, a payload (useful information) in a data packet occupies fewer bytes, and a preamble part in the data packet (generally referred to as a physical protocol data unit PPDU) occupies more bytes. In uplink multi-user transmission, a plurality of stations repeatedly send the preamble part. Consequently, uplink data transmission efficiency is relatively low.
WO 2015/031442 A1 discloses methods and apparatus for acknowledgment of multiple user uplink. In one aspect, a method of wireless communication includes receiving a first wireless message from a first station at least partially concurrently with receiving a second wireless message from a second station, generating a first acknowledgment message in response to receiving the first wireless message, generating a second acknowledgement message in response to receiving the second wireless message, and transmitting the first acknowledgment message to the first station at least partially concurrently with transmitting the second acknowledgement message to the second station.
Alfred Asterjadhi ET AL: "Scheduled Trigger frames - Follow up", 8 November 2015, IEEE Mentor Public Documentation Portal; Retrieved from the Internet: URL: https://mentor.ieee.org/802.11/dcn/15/11 -15-1319-00-00ax-scheduled-triggerframes-follow-up.pptx discloses different TWT modes, a TWT Flow Identifier field, and how to broadcast TWT with multiple TWTs. Robert Stacey: "IEEE P802.11 - Wireless LANs: Specification Framework for TGax", IEEE 802.11-15/0132r13, 7 December 2015, Retrieved from the Internet: URL: https://mentor.ieee.org/802.11/dcn/15/11-15-0132-13-00ax-specframework.docx is related to IEEE 802.11 and discloses the framework from which the draft TGax amendment will be developed. In particular, details of the High Efficiency (HE) Physical Layer are disclosed.

### SUMMARY

In view of the above, the present invention provides a multi-time-segment-based resource indication method and apparatus in a wireless local area network, so that a plurality of pieces of uplink data carrying small-sized traffic are aggregated to one PPDU for transmission, to resolve a problem that efficiency of transmitting small-sized traffic by an existing WLAN device is relatively low.

According to a first aspect, an embodiment of the present invention provides a multi-time-segment-based resource indication method, and the method is applied to a wireless local area network WLAN and includes:
sending, by an access point, a trigger frame, where the trigger frame carries a plurality of time segment information fields, and each of the plurality of time segment information fields includes common information and user-specific information of one or more stations;
receiving, by the access point, a multi-time-segment uplink physical protocol data unit PPDU, where the multi-time-segment uplink PPDU includes uplink data sent by a plurality of stations in a plurality of time segments; and
sending, by the access point, an acknowledgement frame.

With reference to the first aspect, in a first possible implementation of the first aspect, the time segment information fields in the trigger frame are separated by using a delimiter, and each time segment information field in the trigger frame includes a Media Access Control header MAC header and a frame check sequence FCS.

With reference to the first aspect, in a second possible implementation of the first aspect, each time segment information field in the trigger frame includes a frame check sequence FCS.

In the foregoing manner, one multi-time-segment uplink PPDU may include the uplink data sent by the plurality of stations in the plurality of time segments, and frame check is performed on each time segment information field, so that a case in which a receive end cannot correctly perform decoding and reception because the multi-time-segment uplink PPDU is extremely long can be avoided.

With reference to the first aspect and the foregoing implementations, in a third possible implementation of the first aspect, common information of a first time segment information field in the trigger frame includes a total length of the multi-time-segment uplink PPDU and a length of uplink data sent by a station in the first time segment; and
common information of a time segment information field other than the first time segment information field in the trigger frame includes a start point and a length that are of uplink data sent by a station in this time segment.

With reference to the first aspect and the foregoing implementations, in a fourth possible implementation of the first aspect, common information of each time segment information field in the trigger frame includes a total length of the multi-time-segment uplink PPDU, and a start point and a length that are of uplink data sent by a station in this time segment.

With reference to the first aspect, in a fifth possible implementation of the first aspect, the trigger frame further includes at least one of the following parameters: a quantity of time segment information fields or a total length of the multi-time-segment uplink PPDU.

In the foregoing manner, each station can learn of a start time and duration that are of sending uplink data by the station, to ensure time continuity of uplink data sent by stations in different time segments.

With reference to the first aspect or the fifth possible implementation of the first aspect, in a sixth possible implementation of the first aspect, common information of each time segment information field in the trigger frame further includes at least one of the following parameters: a quantity of stations that send uplink data in this time segment, a length of the time segment information field, or an end of frame EOF indication.

With reference to the first aspect, in a seventh possible implementation of the first aspect, the uplink data sent by the plurality of stations in the plurality of time segments includes: first uplink data sent in a first time segment by a station indicated by a first time segment information field, and second uplink data sent in a remaining time segment by a station indicated by a remaining time segment information field.

With reference to the first aspect, in an eighth possible implementation of the first aspect, the uplink data sent by the plurality of stations in the plurality of time segments includes: first uplink data sent in a first time segment by a station indicated by the first time segment information field, second uplink data sent in a remaining time segment by a station indicated by the remaining time segment information field, and third uplink data sent in the first time segment by the station indicated by the remaining time segment information field.

With reference to the seventh or the eighth possible implementation of the first aspect, in a ninth possible implementation of the first aspect, the first uplink data includes a legacy preamble, a high efficiency preamble, and a payload, the second uplink data includes a high efficiency short training sequence, a high efficiency long training sequence, and a payload, and the third uplink data includes a legacy preamble and a high efficiency signaling field.

With reference to the first aspect, in a tenth possible implementation of the first aspect, the acknowledgement frame includes a plurality of time segment block acknowledgement information fields, and each of the plurality of time segment block acknowledgement information fields includes acknowledgement of one or more stations.

With reference to the tenth possible implementation of the first aspect, in an eleventh possible implementation of the first aspect, the time segment block acknowledgement information fields in the acknowledgement frame are separated by using a delimiter, and each time segment block acknowledgement information field in the acknowledgement frame includes a Media Access Control header MAC header and a frame check sequence FCS.

With reference to the tenth possible implementation of the first aspect, in a twelfth possible implementation of the first aspect, each time segment block acknowledgement information field in the acknowledgement frame includes a frame check sequence FCS.

With reference to any one of the tenth to the twelfth possible implementations of the first aspect, in a thirteenth possible implementation of the first aspect, the acknowledgement frame further includes a quantity of time segment block acknowledgement information fields.

With reference to any one of the tenth to the twelfth possible implementations of the first aspect, in a fourteenth possible implementation of the first aspect, each time segment block acknowledgement information field in the acknowledgement frame includes at least one of the following parameters: a length of the time segment block acknowledgement information field or an end of frame EOF indication.

According to a second aspect, an embodiment of the present invention provides a multi-time-segment-based resource indication apparatus, and the apparatus is applied to a wireless local area network WLAN and includes:
a baseband circuit, configured to generate a trigger frame, where the trigger frame carries a plurality of time segment information fields, and each of the plurality of time segment information fields includes common information and user-specific information of one or more stations; and
a radio frequency circuit, configured to send the trigger frame and an acknowledgement frame.

The radio frequency circuit is further configured to receive a multi-time-segment uplink physical protocol data unit PPDU. The multi-time-segment uplink PPDU includes uplink data sent by a plurality of stations in a plurality of time segments.

With reference to the second aspect, in a first possible implementation of the second aspect, the time segment information fields in the trigger frame generated by the baseband circuit are separated by using a delimiter, and each time segment information field in the trigger frame includes a Media Access Control header MAC header and a frame check sequence FCS.

With reference to the second aspect, in a second possible implementation of the second aspect, each time segment information field in the trigger frame generated by the baseband circuit includes a frame check sequence FCS.

In the foregoing manner, one multi-time-segment uplink PPDU may include the uplink data sent by the plurality of stations in the plurality of time segments, and frame check is performed on each time segment information field, so that a case in which a receive end cannot correctly perform decoding and reception because the multi-time-segment uplink PPDU is extremely long can be avoided.

With reference to the second aspect and the foregoing implementations, in a third possible implementation of the second aspect, common information of a first time segment information field in the trigger frame generated by the baseband circuit includes a total length of the multi-time-segment uplink PPDU and a length of uplink data sent by a station in the first time segment; and
common information of a time segment information field other than the first time segment information field in the trigger frame includes a start point and a length that are of uplink data sent by a station in this time segment.

With reference to the second aspect and the foregoing implementations, in a fourth possible implementation of the second aspect, common information of each time segment information field in the trigger frame generated by the baseband circuit includes a total length of the multi-time-segment uplink PPDU, and a start point and a length that are of uplink data sent by a station in this time segment.

With reference to the second aspect, in a fifth possible implementation of the second aspect, the trigger frame generated by the baseband circuit further includes at least one of the following parameters: a quantity of time segment information fields or a total length of the multi-time-segment uplink PPDU.

In the foregoing manner, each station can learn of a start time and duration that are of sending uplink data by the station, to ensure time continuity of uplink data sent by stations in different time segments.

With reference to the second aspect or the fifth possible implementation of the second aspect, in a sixth possible implementation of the second aspect, common information of each time segment information field in the trigger frame generated by the baseband circuit further includes at least one of the following parameters: a quantity of stations that send uplink data in this time segment, a length of the time segment information field, or an end of frame EOF indication.

With reference to the second aspect, in a seventh possible implementation of the second aspect, the uplink data that is sent by the plurality of stations in the plurality of time segments and that is received by the radio frequency circuit includes: first uplink data sent in a first time segment by a station indicated by a first time segment information field, and second uplink data sent in a remaining time segment by a station indicated by a remaining time segment information field.

With reference to the second aspect, in an eighth possible implementation of the second aspect, the uplink data that is sent by the plurality of stations in the plurality of time segments and that is received by the radio frequency circuit includes: first uplink data sent in a first time segment by a station indicated by the first time segment information field, second uplink data sent in a remaining time segment by a station indicated by the remaining time segment information field, and third uplink data sent in the first time segment by the station indicated by the remaining time segment information field.

With reference to the seventh or the eighth possible implementation of the second aspect, in a ninth possible implementation of the second aspect, the first uplink data includes a legacy preamble, a high efficiency preamble, and a payload, the second uplink data includes a high efficiency short training sequence, a high efficiency long training sequence, and a payload, and the third uplink data includes a legacy preamble and a high efficiency signaling field.

With reference to the second aspect, in a tenth possible implementation of the second aspect, the acknowledgement frame sent by the radio frequency circuit includes a plurality of time segment block acknowledgement information fields, and each of the plurality of time segment block acknowledgement information fields includes acknowledgement of one or more stations.

With reference to the tenth possible implementation of the second aspect, in an eleventh possible implementation of the second aspect, the time segment block acknowledgement information fields in the acknowledgement frame sent by the radio frequency circuit are separated by using a delimiter, and each time segment block acknowledgement information field in the acknowledgement frame includes a Media Access Control header MAC header and a frame check sequence FCS.

With reference to the tenth possible implementation of the second aspect, in a twelfth possible implementation of the second aspect, each time segment block acknowledgement information field in the acknowledgement frame sent by the radio frequency circuit includes a frame check sequence FCS.

With reference to any one of the tenth to the twelfth possible implementations of the second aspect, in a thirteenth possible implementation of the second aspect, the acknowledgement frame sent by the radio frequency circuit further includes a quantity of time segment block acknowledgement information fields.

With reference to any one of the tenth to the twelfth possible implementations of the second aspect, in a fourteenth possible implementation of the second aspect, each time segment block acknowledgement information field in the acknowledgement frame sent by the radio frequency circuit includes at least one of the following parameters: a length of the time segment block acknowledgement information field or an end of frame EOF indication.

In the embodiments of the present invention, the access point sends the trigger frame to indicate the start point and the length that are of the uplink data sent by the plurality of stations in the plurality of time segments, and the uplink data sent by the plurality of stations is aggregated to one multi-time-segment uplink PPDU, so that high efficiency resource indication and acknowledgement in a plurality of time segments in an 802.11ax system can be implemented, and efficiency of transmitting small-sized traffic by an existing WLAN device can be improved.

### BRIEF DESCRIPTION OF DRAWINGS

FIG. 1 is a schematic diagram of uplink multi-user transmission in an existing WLAN standard;
FIG. 2 is a diagram of an application scenario according to the present invention;
FIG. 3 is a schematic diagram of uplink multi-user transmission according to the present invention;
FIG. 4 is a diagram of a packet structure of a trigger frame according to the present invention;
FIG. 5 is a diagram of a packet structure of a multi-time-segment uplink PPDU according to the present invention;
FIG. 6 is a diagram of a packet structure of an acknowledgement frame according to the present invention;
FIG. 7 is a diagram of a packet structure of another trigger frame according to the present invention;
FIG. 8 is a diagram of a packet structure of another multi-time-segment uplink PPDU according to the present invention;
FIG. 9 is a diagram of a packet structure of still another trigger frame according to the present invention;
FIG. 10 is a diagram of a packet structure of yet another trigger frame according to the present invention;
FIG. 11 is a diagram of a packet structure of still yet another trigger frame according to the present invention;
FIG. 12 is a diagram of a packet structure of another acknowledgement frame according to the present invention;
FIG. 13 is a diagram of a packet structure of still another acknowledgement frame according to the present invention;
FIG. 14 is a diagram of a packet structure of yet another acknowledgement frame according to the present invention; and
FIG. 15 is a physical structural diagram of a multi-time-segment-based resource indication apparatus according to the present invention.

### DESCRIPTION OF EMBODIMENTS

To make the objectives, technical solutions, and advantages of the present invention clearer, the following further describes the embodiments of the present invention in detail with reference to the accompanying drawings. To understand the present invention comprehensively, the following detailed description mentions many specific details.

The embodiments of the present invention can be applied to a WLAN. Currently, a standard used by the WLAN is an IEEE802.11 series. The WLAN may include a plurality of basic service sets (English: Basic Service Set, BSS for short). A network node in a basic service set is a station (English: Station, STA for short). The station includes an access point (English: Access Point, AP for short) station and a non-access point station (English: None-Access Point Station, Non-AP STA for short). Each basic service set may include one AP and a plurality of non-AP STAs associated with the AP.

The access point station is also referred to as a wireless access point, a hotspot, or the like. The AP is mainly deployed in home or within a building and a park. A typical coverage radius of the AP is tens to hundreds of meters. The AP is equivalent to a bridge connecting a wired network and a wireless network. A main function of the AP is to connect wireless network clients, and then connect the wireless network to an Ethernet network. Specifically, the AP may be a terminal device or a network device with a WiFi (English: Wireless Fidelity, Chinese: Wireless Fidelity) chip. The AP can support a plurality of standards such as 802.11ax, 802.11ac, 802.11n, 802.11g, 802.11b, and 802.11a.

The non-access point station (English: None-Access Point Station, Non-AP STA for short) may be a wireless communications chip, a wireless sensor, or a wireless communications terminal. Specifically, for example, the non-access point station may be a smartphone, a tablet computer, or a personal computer that supports a WiFi communication function, a set top box or a smart TV that supports a WiFi communication function, a smart wearable device that supports a WiFi communication function, an in-vehicle communications device that supports a WiFi communication function, or a drone that supports a WiFi communication function. The station can support a plurality of standards such as 802.11ax, 802.11ac, 802.11n, 802.11g, 802.11b, and 802.11a. It should be noted that the non-AP STA is referred to as STA for short below.

FIG. 2 is a schematic system diagram of a typical WLAN deployment scenario, including one AP and four STAs. The AP communicates with a STA 1 to a STA 4. For the 802.11 family, a work group TGax introduces an OFDMA (English: Orthogonal Frequency Division Multiple Access, Chinese: orthogonal frequency division multiple access) technology and an uplink MU-MIMO (English: Multi-User Multiple-Input Multiple-Output, Chinese: multi-user multiple-input multiple-output) technology into a next-generation WLAN standard. The foregoing technologies are used, so that data transmission can be performed between the STA 1 to the STA 4 and the AP on different frequency resources at the same time or on different spatial flows at the same time.

### Embodiment 1

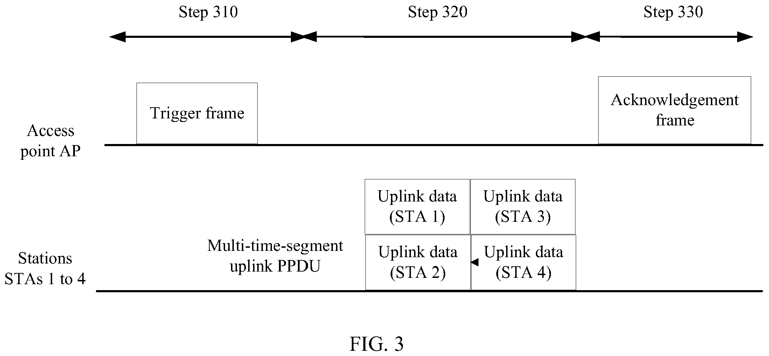

Embodiment 1 of the present invention provides a multi-time-segment-based resource indication method. The method may be applied to an access point and a station, such as the AP and the STA 1 to the STA 4 in FIG. 2. The access point and the station can support a next-generation WLAN standard, such as the 802.11ax standard. FIG. 3 is a flowchart of the resource indication method, and specific steps are as follows:
Step 310: An access point sends a trigger frame.
Step 320: The access point receives a multi-time-segment uplink physical protocol data unit PPDU.
Step 330: The access point sends an acknowledgement frame.

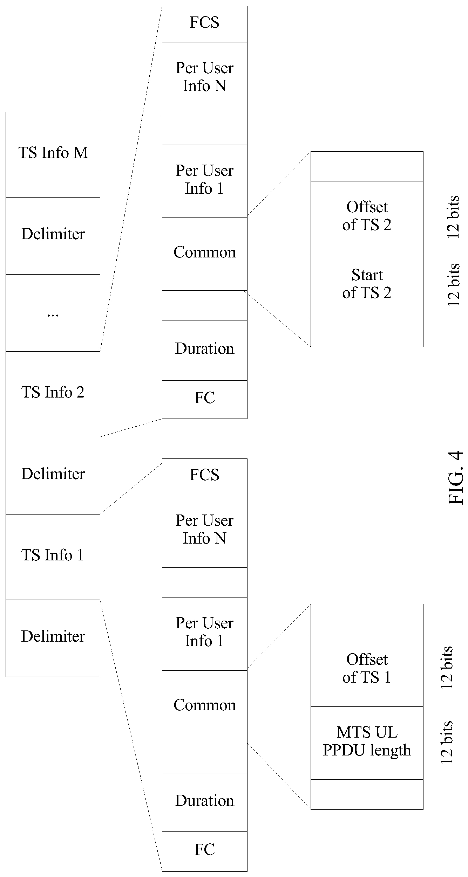

Specifically, a detailed structure of the trigger frame mentioned in step 310 is shown in FIG. 4. The trigger frame carries a plurality of time segment information fields, and each of the plurality of time segment information fields includes common information and user-specific information of one or more stations. TS Info 1 to TS Info M in FIG. 4 indicate M time segment information (English: Time Segment Information, TS Info for short) fields.

Optionally, the time segment information fields in the trigger frame are separated by using a delimiter, and each time segment information field in the trigger frame includes a Media Access Control header MAC header and a frame check sequence FCS. It should be noted that, a frame structure of the trigger frame shown in FIG. 4 is similar to an A-MPDU (English: Aggregate MAC Protocol Data Unit, Chinese: aggregate MAC protocol data unit). TS Info fields are separated by using a delimiter. Each TS Info field includes a frame control (English: Frame Control) field, duration (English: Duration), and a frame check sequence (English: Frame Check Sequence). The delimiter, the frame control field, the duration, and the FCS sequence are described in detail in the existing 802.11 standard.

Further, each of the plurality of time segment information fields includes common information and user-specific information of one or more stations. As shown in FIG. 4, the common information is a common field, and the user-specific information is a Per User Info field. The user-specific information includes frequency domain information, spatial flow information, a modulation and coding scheme MCS, and the like. It should be noted that a quantity (such as N in FIG. 4) of pieces of user-specific information that is of a station and that is included in each time segment information field may vary.

Optionally, common information of a first time segment information field in the trigger frame includes a total length of the multi-time-segment uplink PPDU, and a length of uplink data sent by a station in the first time segment. Common information of a time segment information field other than the first time segment information field in the trigger frame includes a start point and a length that are of uplink data sent by a station in this time segment. As shown in FIG. 4, an MTS UL PPDU length (English: Multiple Time segment Uplink PPDU Length, Chinese: multi-time-segment uplink PPDU length) of a common field in the TS Info 1 is the total length of the multi-time-segment uplink PPDU received by the AP, and offset of TS 1 of the common field in the TS Info 1 is the length of the uplink data sent by the station in the first time segment. Start of TS 2 of a common field in TS Info 2 is a start point of uplink data sent by a station in a second time segment, and offset of TS 2 of the common field in the TS Info 2 is a length of the uplink data sent by the station in the second time segment. Preferably, four fields: the MTS UL PPDU length, the offset of TS 1, the start of TS, and the offset of TS 2 each include 12 bits. Bit quantities of the four fields are not limited in the present invention. In addition, a unit of an equivalent time length indicated by the four fields is byte (English: Byte). For example, if a value of the offset of TS 2 is "000010010100", a quantity of equivalent bytes of the uplink data sent in the second time segment is 148 bytes.

It should be noted that a limitation on the length of the uplink data and a limitation on the start point of the uplink data in the foregoing four fields are described in detail below.

Optionally, the multi-time-segment uplink PPDU mentioned in step 320 includes uplink data sent by a plurality of stations in a plurality of time segments. Further, optionally, the uplink data includes first uplink data sent in a first time segment by a station indicated by a first time segment information field, and second uplink data sent in a remaining time segment by a station indicated by a remaining time segment information field.

Specifically, the first uplink data includes a legacy preamble, a high efficiency preamble, and a payload, and the second uplink data includes a high efficiency short training sequence, a high efficiency long training sequence, and a payload.

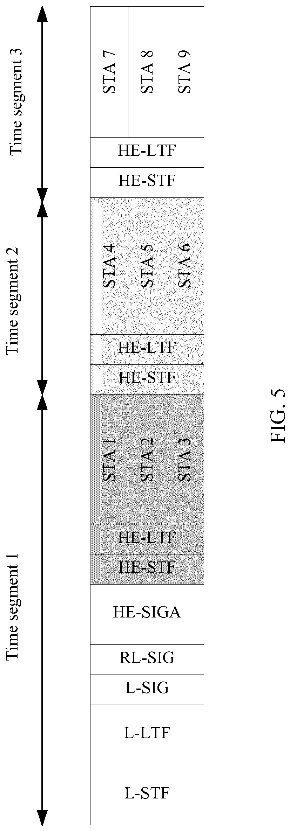

A structure of the multi-time-segment uplink PPDU is shown in FIG. 5. Specifically, uplink data sent in a time segment 1 is the first uplink data, and uplink data sent in a time segment 2 and uplink data sent in a time segment 3 are the second uplink data. The legacy preamble includes an L-STF (English: Legacy Short Training Field, Chinese: legacy short training field), an L-LTF (English: Legacy Long Training Field, Chinese: legacy long training field), an L-SIG (English: Legacy Signaling Field, Chinese: legacy signaling field), an RL-SIG (English: Repeated Legacy Signaling Field, Chinese: repeated legacy signaling field), and high efficiency signaling A (High efficiency signaling A, HE-SIGA for short). The high efficiency preamble includes an HE-STF (English: High efficiency Short Training Field, Chinese: high efficiency short training field) and an HE-LTF (English: High efficiency Long Training Field, Chinese: high efficiency long training field). A STA 1 to a STA 9 in FIG. 5 represent payloads (English: Payload) of uplink data sent by the station 1 to the station 9.

It should be noted that, four fields: the MTS UL PPDU length, the offset of TS 1, the start of TS 2, and the offset of TS 2 in the trigger frame are explained with reference to FIG. 5.

The MTS UL PPDU length is a quantity of equivalent bytes of a transmission time from the L-SIG to an end of the multi-time-segment uplink PPDU (in other words, an end point of STAs 7 to 9).

The offset of TS 1 is a quantity of equivalent bytes of a transmission time from the L-SIG to an end of the time segment 1 (in other words, an end point of STAs 1 to 3) in the multi-time-segment uplink PPDU.

The start of TS 2 is limited to two options. In a first option, the start of TS 2 is the quantity of equivalent bytes of the transmission time from the L-SIG to the end of the time segment 1 (in other words, the end point of the STAs 1 to 3) in the multi-time-segment uplink PPDU. In a second option, the start of TS 2 is a quantity of equivalent bytes of a transmission time from the L-STF to the end of the time segment 1 (in other words, the end point of the STAs 1 to 3) in the multi-time-segment uplink PPDU.

The offset of TS 2 is a quantity of equivalent bytes of a transmission time of the time segment 2, to be specific, a quantity of equivalent bytes of a transmission time from the HE-STF of the time segment 2 to an end of the time segment 2 (in other words, an end point of STAs 4 to 6).

A station sending uplink data in the time segment 2 determines, by using the start of TS 2, a start time of sending the uplink data, and determines, by using the offset of TS 2, duration of sending the uplink data. In the foregoing manner, time continuity of the uplink data sent by the station in the time segment 2 and the uplink data sent in the time segment 1 can be kept. A principle of a station sending uplink data in another time segment is the same as the principle of the station sending the uplink data in the time segment 2.

It should be noted that, actual lengths of payloads sent by different stations in a same time segment are different from a quantity of equivalent bytes of a time segment indicated by the trigger frame. In this case, padding may be added to the payload, so that the lengths of the payloads of uplink data sent by the stations are the same as the quantity of equivalent bytes of the time segment indicated by the trigger frame.

Optionally, the acknowledgement frame in step 330 includes many implementations. Manner 1: The access point may return an ACK frame for uplink data sent by each station. For the multi-time-segment uplink PPDU in FIG. 5, nine ACK frames may be chronologically sent, and are used to acknowledge the uplink data sent by the station 1 to the station 9. Manner 2: The access point may send three acknowledgement frames. A first acknowledgement frame is for three stations sending uplink data in the time segment 1, a second acknowledgement frame is for three stations sending uplink data in the time segment 2, and a third acknowledgement frame is for three stations sending uplink data in the time segment 3.

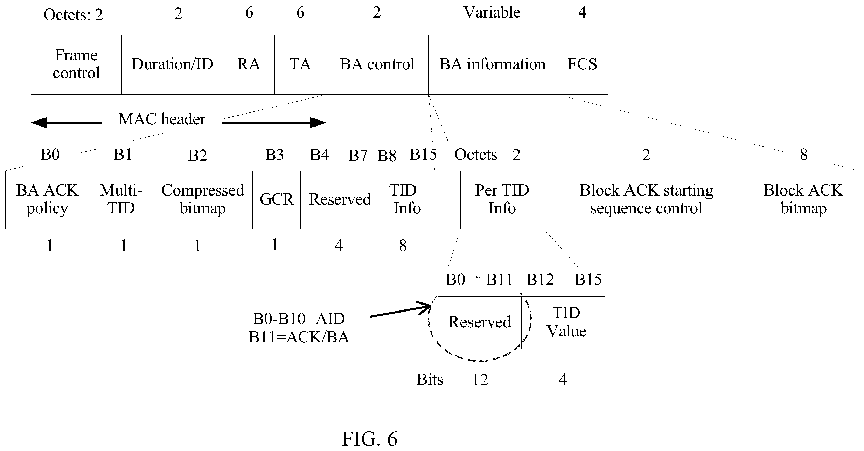

Manner 3: The access point sends a block acknowledgement frame, to acknowledge the uplink data sent by the station 1 to the station 9. A structure of the acknowledgement frame is shown in FIG. 6. The acknowledgement frame includes a MAC header (MAC Header) part and a frame body (Frame body) part.

The MAC header part includes a frame control (Frame control) field, a duration/identifier (Duration/ID) field, a receiver address (receiver address, RA), and a transmitter address (transmitter address, TA).

The frame body part includes a block acknowledgement control (BA control) field, a block acknowledgement information (BA information) field, and a frame check sequence (FCS). The block acknowledgement control field includes a block acknowledgement request acknowledgement policy (BAR ACK Policy) field, a multi-traffic identifier (Multi-TID) field, a compressed bitmap (Compressed Bitmap) field, a groupcast with retries (Groupcast with Retries, GCR) field, a reserved field, and a traffic identifier information (TID_Info) field. The block acknowledgement information field includes per traffic identifier information (Per TID INFO) field, a block acknowledgement starting sequence control (Block ACK Starting Sequence Control) field, and a block acknowledgement bitmap (Block ACK Bitmap). The Per TID Info field includes an 11-bit (B0-B10) association identifier (AID), a 1-bit (B11) ACK/BA indicator bit, and a 4-bit traffic identifier value (TID Value).

In Manner 3, the TID_Info field is used to define a quantity of stations that need to be acknowledged, and a 4-bit TID_Info field may acknowledge 16 stations. It should be noted that, the TID_Info field may borrow bits of the reserved field. Therefore, the TID_Info field may be of a maximum of 12 bits, and may acknowledge 4096 stations. A bit quantity of the TID_Info field is not limited in the present invention. A station identifier is represented by using the 11-bit (B0-B10) AID in the Per TID Info field.

If uplink data sent by a station is a single data packet, and B11 is "0" and indicates ACK, the block acknowledgement starting sequence control (Block ACK Starting Sequence Control) field and the block acknowledgement bitmap (Block ACK Bitmap) in the block acknowledgement information (BA information) field no longer appear. A length of the block acknowledgement information (BA information) field is obtained by multiplying a quantity of stations by a length of the Per TID Info field.

If uplink data sent by a station is an aggregated data packet, and B11 is "1" and indicates BA, the block acknowledgement starting sequence control (Block ACK Starting Sequence Control) field and the block acknowledgement bitmap (Block ACK Bitmap) in the block acknowledgement information (BA information) field are reserved. A length of the block acknowledgement information (BA information) field is obtained by multiplying a sum of lengths of the three fields: the Per TID Info field, the Block ACK Starting Sequence Control field, and the block acknowledgement bitmap (Block ACK Bitmap) by a quantity of stations.

In this embodiment of the present invention, the access point sends the trigger frame to indicate the start point and the length that are of the uplink data sent by the plurality of stations in the plurality of time segments, and the uplink data sent by the plurality of stations is aggregated to one multi-time-segment uplink PPDU, so that high efficiency resource indication and acknowledgement in a plurality of time segments in an 802.11ax system can be implemented, and efficiency of transmitting small-sized traffic by an existing WLAN device can be improved.

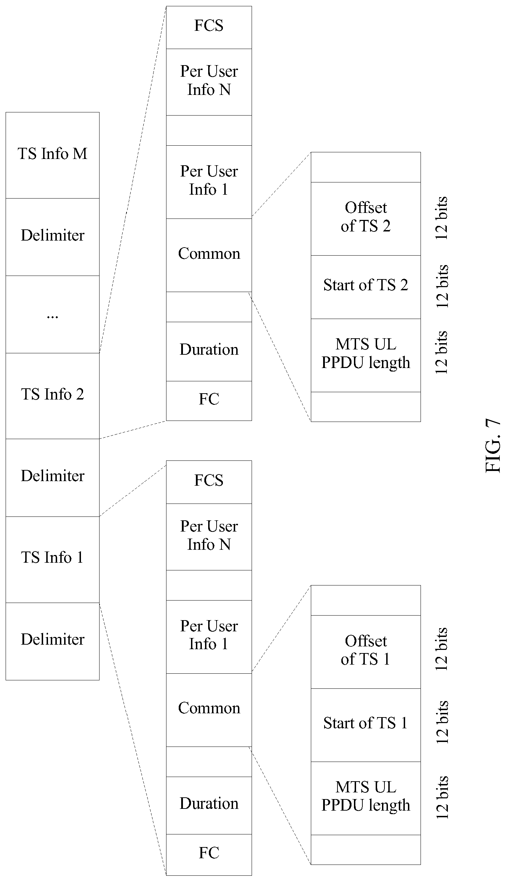

Optionally, the trigger frame in step 310 further includes another implementation. Specifically, common information of each time segment information field in the trigger frame includes a total length of the multi-time-segment uplink PPDU, and a start point and a length that are of uplink data sent by a station in this time segment. A specific structure of the trigger frame is shown in FIG. 7. A difference from the structure of the trigger frame in FIG. 4 lies in that, each time segment information field includes the total length of the multi-time-segment uplink PPDU. In the foregoing manner, each station indicated by the trigger frame can read the total length of the multi-time-segment uplink PPDU, and therefore each station sets a length value in an L-SIG field of sent uplink data.

Optionally, the multi-time-segment uplink PPDU in step 320 further includes another implementation. Specifically, the uplink data sent by the plurality of stations in the plurality of time segments includes: first uplink data sent in a first time segment by a station indicated by the first time segment information field, second uplink data sent in a remaining time segment by a station indicated by the remaining time segment information field, and third uplink data sent in the first time segment by the station indicated by the remaining time segment information field. The first uplink data includes a legacy preamble, a high efficiency preamble, and a payload, the second uplink data includes a high efficiency short training sequence, a high efficiency long training sequence, and a payload, and the third uplink data includes a legacy preamble and a high efficiency signaling field.

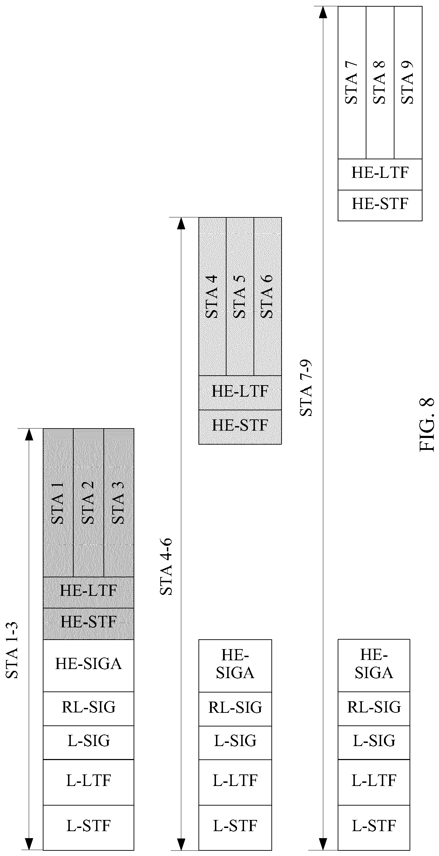

A structure of the multi-time-segment uplink PPDU is shown in FIG. 8. In a first time segment, all stations (STAs 1 to 9) send the legacy preamble and the high efficiency signaling field. Stations (STAs 1 to 3) indicated by the first time segment information field in the trigger frame further send the high efficiency preamble and a payload of uplink data. In a second time segment, stations (STAs 4 to 6) send the high efficiency short training sequence, the high efficiency long training sequence, and a payload of uplink data. In a third time segment, stations (STAs 7 to 9) send the high efficiency short training sequence, the high efficiency long training sequence, and a payload of uplink data. In the foregoing manner, time continuity of uplink data sent by stations in different time segments is implemented.

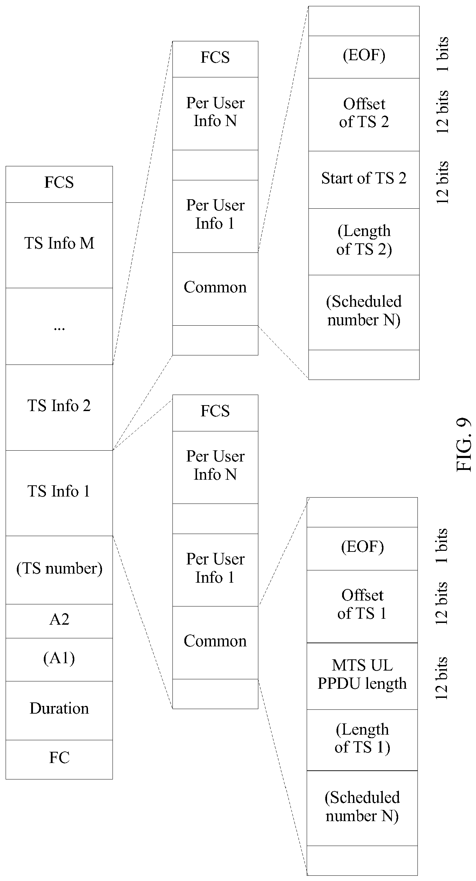

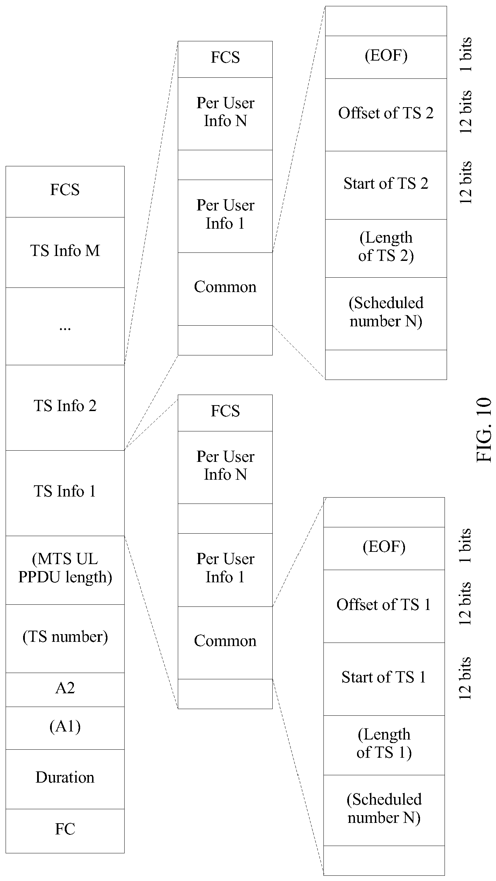

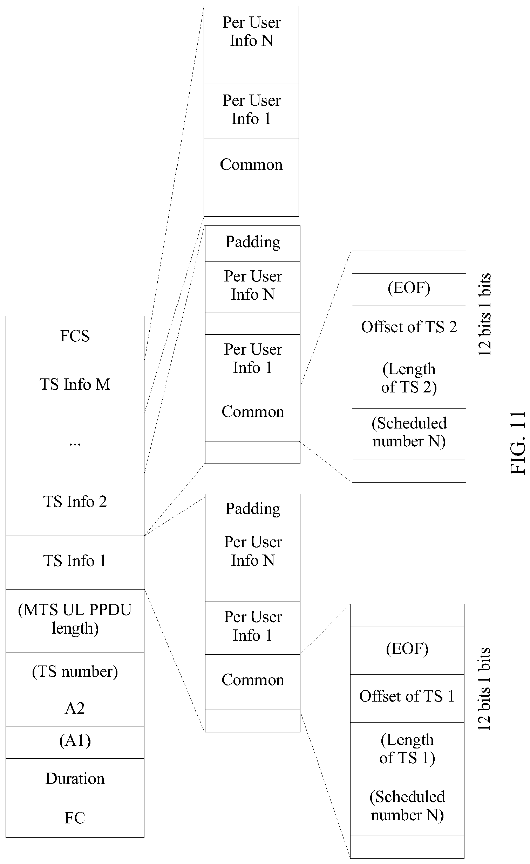

Optionally, the trigger frame in step 310 further includes the following three implementations, as shown in FIG. 9 to FIG. 11. There is no delimiter between different time segment information fields in the trigger frame in the three implementations. Each time segment information field has no independent MAC header, and each time segment information field includes an independent FCS.

Further, optionally, the trigger frame further includes at least one of the following parameters: a quantity of time segment information fields or a total length of the multi-time-segment uplink PPDU. A TS number field in FIG. 9 is the quantity of time segment information fields. It should be noted that, the parameters may be entirely carried by the trigger frame, or may be partially carried by the trigger frame, or may not appear in the trigger frame.

Further, optionally, common information of each time segment information field in the trigger frame further includes at least one of the following parameters: a quantity of stations that send uplink data in this time segment, a length of the time segment information field, or an end of frame EOF indication. Scheduled number N in FIG. 9 to FIG. 11 is a quantity of stations scheduled in each time segment information field. Length of TS 1 in FIG. 9 to FIG. 11 is a length of each time segment information field. An EOF indication in FIG. 9 to FIG. 11 is used to define whether this time segment information field is a last time segment information field. It should be noted that, the parameters may be entirely carried by the trigger frame, or may be partially carried by the trigger frame, or may not appear in the trigger frame.

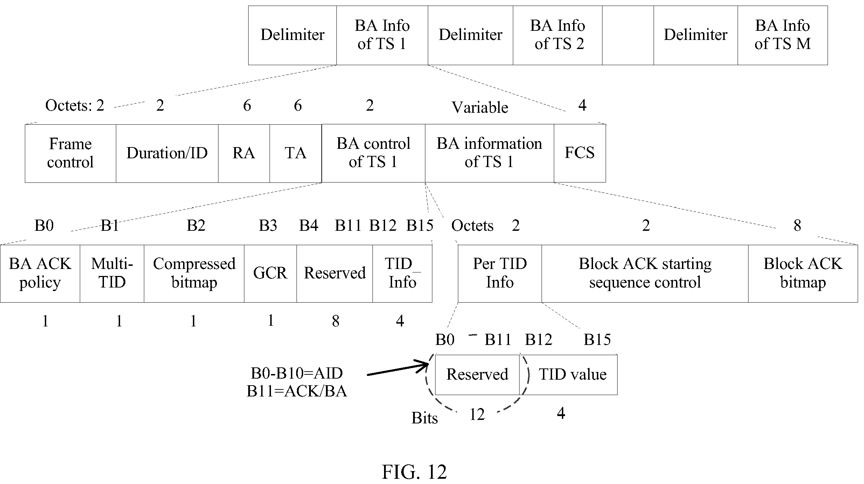

Optionally, the acknowledgement frame in step 330 further includes a plurality of implementations, as shown in FIG. 12 to FIG. 14. Specifically, the acknowledgement frame includes a plurality of time segment block acknowledgement information fields, and each of the plurality of time segment block acknowledgement information fields includes acknowledgement of one or more stations. BA Info of TS 1 to BA Info of TS M in FIG. 12 to FIG. 14 are M time segment block acknowledgement information fields. Each time segment block acknowledgement information field includes acknowledgement of one or more stations.

Optionally, the time segment block acknowledgement information fields in the acknowledgement frame are separated by using a delimiter, and each time segment block acknowledgement information field in the acknowledgement frame includes a Media Access Control header MAC header and a frame check sequence FCS. A structure of the acknowledgement frame is shown in FIG. 12.

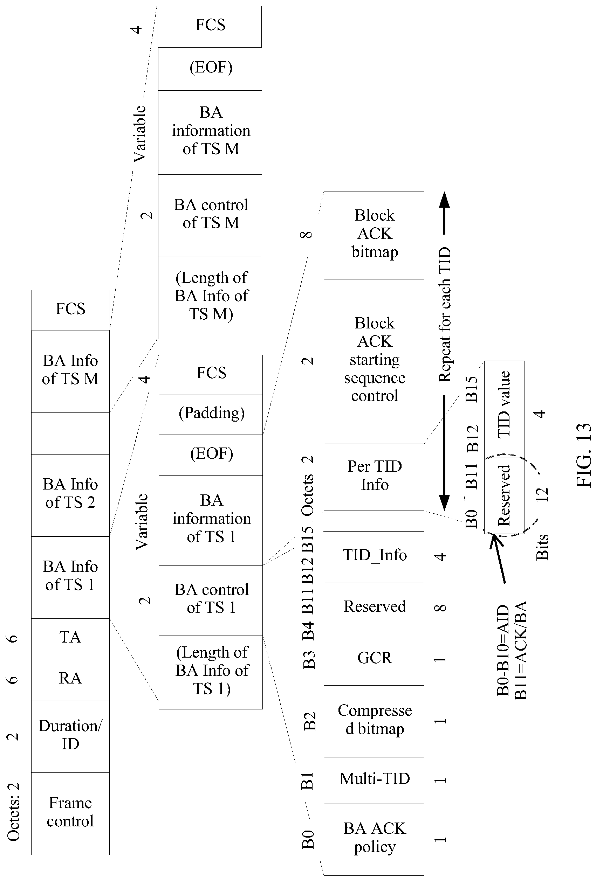

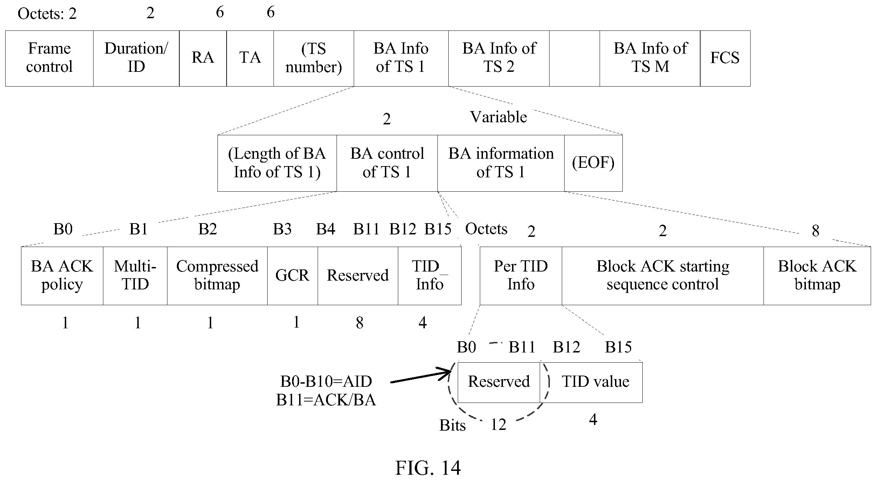

Optionally, there is no delimiter between different time segment block acknowledgement information fields in the acknowledgement frame, each time segment block acknowledgement information field does not include a Media Access Control header MAC header, and each time segment block acknowledgement information field includes a frame check sequence FCS. A structure of the acknowledgement frame is shown in FIG. 13 and FIG. 14.

Optionally, the acknowledgement frame further includes a quantity of time segment block acknowledgement information fields. TS number in FIG. 14 is the quantity of time segment block acknowledgement information fields.

Optionally, each time segment block acknowledgement information field in the acknowledgement frame includes at least one of the following parameters: a length of the time segment block acknowledgement information field or an end of frame EOF indication. An end of frame EOF indication in FIG. 13 and FIG. 14 is used to define whether this time segment block acknowledgement information field is a last time segment block acknowledgement information field.

It should be noted that, setting of the Per TID Info field in the acknowledgement frame is described in detail in the foregoing embodiment. Details are not repeatedly described.

In view of the above, the present invention provides the multi-time-segment-based resource indication method. The resource indication method includes step 310, step 320, and step 330. The trigger frame sent by the AP in step 310 includes at least five implementations, as shown in FIG. 4, FIG. 7, and FIG. 9 to FIG. 11. The multi-time-segment uplink PPDU received by the AP in step 320 includes at least two implementations, as shown in FIG. 5 and FIG. 8. The acknowledgement frame sent by the AP in step 330 includes an existing ACK acknowledgement manner, and also includes a block acknowledgement manner, as shown in FIG. 6, and FIG. 12 to FIG. 14. Selection of different implementations in different steps is not limited in the present invention. In the foregoing manner, high efficiency resource indication and acknowledgement in a plurality of time segments in an 802.11ax system can be implemented, and efficiency of transmitting small-sized traffic by an existing WLAN device can be improved.

### Embodiment 2

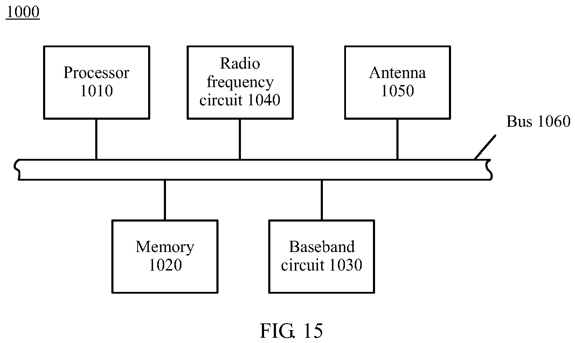

Referring to FIG. 15, FIG. 15 is a schematic block diagram of a multi-time-segment-based resource indication apparatus 1000 in a wireless local area network according to an embodiment of the present invention. The resource indication apparatus is, for example, an access point, or a dedicated circuit or a chip implementing a related function. The resource indication apparatus 1000 includes a processor 1010, a memory 1020, a baseband circuit 1030, a radio frequency circuit 1040, and an antenna 1050. The resource indication apparatus may be the AP shown in FIG. 2. The AP communicates with a STA 1 to a STA 4.

Specifically, the processor 1010 controls operations of the resource indication apparatus 1000. The memory 1020 may include a read-only memory and a random access memory, and provide an instruction and data for the processor 1010. The processor may be a general-purpose processor, a digital signal processor, an application-specific integrated circuit, a field programmable gate array, or another programmable logic device. A part of the memory 1020 may further include a nonvolatile random access memory (NVRAM). The baseband circuit 1030 is configured to synthesize to-be-transmitted baseband signals, or decode received baseband signals. The radio frequency circuit 1040 is configured to modulate a low-frequency baseband signal to a high-frequency carrier signal, and the high-frequency carrier signal is transmitted by using the antenna 1050. The radio frequency circuit is further configured to demodulate a high-frequency signal received by the antenna 1050 to a low-frequency carrier signal. All components of the resource indication apparatus 1000 are coupled together by using a bus system 1060. In addition to a data bus, the bus system 1060 includes a power bus, a control bus, and a status signal bus. However, for clear description, various types of buses in the figure are marked as the bus system 1060. It should be noted that, the description about the structure of the resource indication apparatus may be applied to a subsequent embodiment.

The baseband circuit 1030 is configured to generate a trigger frame. The trigger frame carries a plurality of time segment information fields, and each of the plurality of time segment information fields includes common information and user-specific information of one or more stations.

The radio frequency circuit 1040 is configured to send the trigger frame and an acknowledgement frame.

The radio frequency circuit 1040 is further configured to receive a multi-time-segment uplink physical protocol data unit PPDU. The multi-time-segment uplink PPDU includes uplink data sent by a plurality of stations in a plurality of time segments.

Optionally, in an implementation, the time segment information fields in the trigger frame generated by the baseband circuit are separated by using a delimiter, and each time segment information field in the trigger frame includes a Media Access Control header MAC header and a frame check sequence FCS.

Optionally, in another implementation, each time segment information field in the trigger frame generated by the baseband circuit includes a frame check sequence FCS. Different time segment information fields in the trigger frame do not include a delimiter, and each time segment information field in the trigger frame does not include a MAC header.

Further, content of each time segment information field in the trigger frame includes a plurality of implementations.

Manner 1: Common information of a first time segment information field in the trigger frame generated by the baseband circuit includes a total length of the multi-time-segment uplink PPDU and a length of uplink data sent by a station in the first time segment.

Common information of a time segment information field other than the first time segment information field in the trigger frame includes a start point and a length that are of uplink data sent by a station in this time segment.

Manner 2: Common information of each time segment information field in the trigger frame generated by the baseband circuit includes a total length of the multi-time-segment uplink PPDU, and a start point and a length that are of uplink data sent by a station in this time segment.

The common information of each time segment information field in the trigger frame generated by the baseband circuit further includes at least one of the following parameters: a quantity of stations that send uplink data in this time segment, a length of the time segment information field, or an end of frame EOF indication.

Optionally, the trigger frame generated by the baseband circuit further includes at least one of the following parameters: a quantity of time segment information fields or a total length of the multi-time-segment uplink PPDU.

It should be noted that, a structure of the trigger frame is described in detail in FIG. 4, FIG. 7, and FIG. 9 to FIG. 11, and the structure of the trigger frame is described in detail in Embodiment 1. Details are not described again.

Further, the uplink data that is sent by the plurality of stations in the plurality of time segments and that is received by the radio frequency circuit includes a plurality of implementations.

Manner 1: The uplink data includes first uplink data sent in a first time segment by a station indicated by a first time segment information field, and second uplink data sent in a remaining time segment by a station indicated by a remaining time segment information field.

Manner 2: The uplink data includes first uplink data sent in a first time segment by a station indicated by the first time segment information field, second uplink data sent in a remaining time segment by a station indicated by the remaining time segment information field, and third uplink data sent in the first time segment by the station indicated by the remaining time segment information field.

Specifically, in the uplink data sent by the station, the first uplink data includes a legacy preamble, a high efficiency preamble, and a payload, the second uplink data includes a high efficiency short training sequence, a high efficiency long training sequence, and a payload, and the third uplink data includes a legacy preamble and a high efficiency signaling field.

It should be noted that, a structure of the multi-time-segment uplink PPDU is shown in FIG. 5 and FIG. 8, and the structure of the multi-time-segment uplink PPDU is described in detail in Embodiment 1. Details are not described again.

Further, the acknowledgement frame sent by the radio frequency circuit includes a plurality of implementations.

Specifically, the acknowledgement frame sent by the radio frequency circuit includes a plurality of time segment block acknowledgement information fields, and each of the plurality of time segment block acknowledgement information fields includes acknowledgement of one or more stations.

Optionally, in an implementation, the time segment block acknowledgement information fields in the acknowledgement frame sent by the radio frequency circuit are separated by using a delimiter, and each time segment block acknowledgement information field in the acknowledgement frame includes a Media Access Control header MAC header and a frame check sequence FCS.

Optionally, in another implementation, each time segment block acknowledgement information field in the acknowledgement frame sent by the radio frequency circuit includes a frame check sequence FCS. Different time segment block acknowledgement information fields in the acknowledgement frame do not include a delimiter, and each time segment block acknowledgement information field in the acknowledgement frame does not include a MAC header.

The acknowledgement frame sent by the radio frequency circuit further includes some optional fields. Specifically, the acknowledgement frame sent by the radio frequency circuit further includes a quantity of time segment block acknowledgement information fields. Each time segment block acknowledgement information field in the acknowledgement frame sent by the radio frequency circuit includes at least one of the following parameters: a length of the time segment block acknowledgement information field or an end of frame EOF indication.

This embodiment of the present invention provides the multi-time-segment-based resource indication apparatus. The trigger frame generated by the baseband circuit of the apparatus is sent by the radio frequency circuit, and the trigger frame indicates the start point and the length that are of the uplink data sent by the plurality of stations in the plurality of time segments, so that the uplink data sent by the plurality of stations and received by the radio frequency circuit is aggregated to one multi-time-segment uplink PPDU. In the foregoing manner, high efficiency resource indication and acknowledgement in a plurality of time segments in an 802.11ax system can be implemented, and efficiency of transmitting small-sized traffic by an existing WLAN device can be improved.

## Claims

1. A multi-time-segment-based resource indication method, applied to a wireless local area network, WLAN, wherein the method comprises:
sending, by an access point, a trigger frame, wherein the trigger frame carries a plurality of time segment information fields, and each of the plurality of time segment information fields comprises common information and station-specific information of one or more stations;
receiving, by the access point, a multi-time-segment uplink physical protocol data unit, PPDU, wherein the multi-time-segment uplink PPDU comprises uplink data sent by a plurality of stations in a plurality of time segments; and
sending, by the access point, an acknowledgement frame.

2. The method according to claim 1, wherein the time segment information fields in the trigger frame are separated by using a delimiter, and each time segment information field in the trigger frame comprises a Media Access Control header, MAC header and a frame check sequence, FCS.

3. The method according to claim 1, wherein each time segment information field in the trigger frame comprises a frame check sequence, FCS.

4. The method according to any one of claims 1 to 3, wherein common information of a first time segment information field in the trigger frame comprises a total length of the multi-time-segment uplink PPDU and a length of uplink data sent by a station in a first time segment; and
common information of a time segment information field other than the first time segment information field in the trigger frame comprises a start point and a length that are of uplink data sent by a station in a time segment corresponding to the time segment information field other than the first time segment information field.

5. The method according to any one of claims 1 to 3, wherein common information of each time segment information field in the trigger frame comprises a total length of the multi-time-segment uplink PPDU, and a start point and a length that are of uplink data sent by a station in a time segment corresponding to each time segment information field.

6. The method according to claim 1, wherein the trigger frame further comprises at least one of the following parameters: a quantity of time segment information fields or a total length of the multi-time-segment uplink PPDU.

7. The method according to claim 1 or 6, wherein common information of each time segment information field in the trigger frame further comprises at least one of the following parameters: a quantity of stations that send uplink data in this time segment, a length of the time segment information field, or an end of frame, EOF indication.

8. The method according to claim 1, wherein the uplink data sent by the plurality of stations in the plurality of time segments comprises: first uplink data sent in a first time segment by a station indicated by a first time segment information field, and second uplink data sent in a remaining time segment by a station indicated by a remaining time segment information field.

9. A multi-time-segment-based resource indication apparatus (1000), applied to a wireless local area network, WLAN, and comprising:
a baseband circuit (1030), configured to generate a trigger frame, wherein the trigger frame carries a plurality of time segment information fields, and each of the plurality of time segment information fields comprises common information and station-specific information of one or more stations; and
a radio frequency circuit (1040), configured to send the trigger frame and an acknowledgement frame; wherein
the radio frequency circuit (1040) is further configured to receive a multi-time-segment uplink physical protocol data unit, PPDU, wherein the multi-time-segment uplink PPDU comprises uplink data sent by a plurality of stations in a plurality of time segments.

10. The apparatus according to claim 9, wherein the time segment information fields in the trigger frame generated by the baseband circuit (1030) are separated by using a delimiter, and each time segment information field in the trigger frame comprises a Media Access Control header, MAC header and a frame check sequence, FCS.

11. The apparatus according to claim 9, wherein each time segment information field in the trigger frame generated by the baseband circuit (1030) comprises a frame check sequence, FCS.

12. The apparatus according to any one of claims 9 to 11, wherein common information of a first time segment information field in the trigger frame generated by the baseband circuit (1030) comprises a total length of the multi-time-segment uplink PPDU and a length of uplink data sent by a station in a first time segment; and
common information of a time segment information field other than the first time segment information field in the trigger frame comprises a start point and a length that are of uplink data sent by a station in this time segment.

13. The apparatus according to any one of claims 9 to 11, wherein common information of each time segment information field in the trigger frame generated by the baseband circuit (1030) comprises a total length of the multi-time-segment uplink PPDU, and a start point and a length that are of uplink data sent by a station in this time segment.

14. The apparatus according to claim 9, wherein the trigger frame generated by the baseband circuit (1030) further comprises at least one of the following parameters: a quantity of time segment information fields or a total length of the multi-time-segment uplink PPDU.

15. The apparatus according to claim 9 or 14, wherein common information of each time segment information field in the trigger frame generated by the baseband circuit (1030) further comprises at least one of the following parameters: a quantity of stations that send uplink data in this time segment, a length of the time segment information field, or an end of frame, EOF indication.

## Patentansprüche

1. Auf mehreren Zeitsegmenten basiertes Ressourcenanzeigeverfahren, das auf ein drahtloses lokales Netzwerk, WLAN, angewendet wird, wobei das Verfahren Folgendes umfasst:
Senden, durch einen Zugangspunkt, eines Trigger-Frames, wobei der Trigger-Frame mehrere Zeitsegmentinformationsfelder trägt und jedes der mehreren Zeitsegmentinformationsfelder gemeinsame Informationen und stationsspezifische Informationen von einer oder mehreren Stationen umfasst;
Empfangen, durch den Zugangspunkt, einer physikalischen Mehrfachzeitsegment-Aufwärtsstrecken-Protokolldateneinheit, PPDU, wobei die Mehrfachzeitsegment-Aufwärtsstrecken-PPDU Aufwärtsstreckendaten umfasst, die durch mehrere Stationen in mehreren Zeitsegmenten gesendet wurden; und
Senden, durch den Zugangspunkt, eines Bestätigungs-Frames.

2. Verfahren nach Anspruch 1, wobei die Zeitsegmentinformationsfelder in dem Trigger-Frame unter Verwendung eines Trennzeichens getrennt sind, und jedes Zeitsegmentinformationsfeld in dem Trigger-Frame einen Medienzugangs-Steuerungskopf, MAC-Kopf, und eine Frame-Prüfsequenz, FCS, umfasst.

3. Verfahren nach Anspruch 1, wobei jedes Zeitsegmentinformationsfeld in dem Trigger-Frame eine Frame-Prüfsequenz, FCS, umfasst.

4. Verfahren nach einem der Ansprüche 1 bis 3, wobei gemeinsame Informationen eines ersten Zeitsegmentinformationsfelds in dem Trigger-Frame eine Gesamtlänge der Mehrfachzeitsegment-Aufwärtsstrecken-PPDU und eine Länge der Aufwärtsstreckendaten umfassen, die durch eine Station in einem ersten Zeitsegment gesendet wurden; und
gemeinsame Informationen eines anderen Zeitsegmentinformationsfelds als dem ersten Zeitsegmentinformationsfeld in dem Trigger-Frame einen Startpunkt und eine Länge umfassen, die von Aufwärtsstreckendaten sind, die durch eine Station in einem Zeitsegment gesendet wurden, das dem anderen Zeitsegmentinformationsfeld als dem ersten Zeitsegmentinformationsfeld entspricht.

5. Verfahren nach einem der Ansprüche 1 bis 3, wobei gemeinsame Informationen jedes Zeitsegmentinformationsfelds in dem Trigger-Frame eine Gesamtlänge der Mehrfachzeitsegment-Aufwärtsstrecken-PPDU und einen Startpunkt und eine Länge umfassen, die von den Aufwärtsstreckendaten sind, die durch eine Station in einem Zeitsegment gesendet wurden, das jedem Zeitsegmentinformationsfeld entspricht

6. Verfahren nach Anspruch 1, wobei der Trigger-Frame weiterhin mindestens einen der folgenden Parameter umfasst: eine Quantität von Zeitsegmentinformationsfeldem oder eine Gesamtlänge der Mehrfachzeitsegment-Aufwärtsstrecken-PPDU.

7. Verfahren nach Anspruch 1 oder 6, wobei gemeinsame Informationen jedes Zeitsegmentinformationsfelds in dem Trigger-Frame weiterhin mindestens einen der folgenden Parameter umfasst: eine Quantität von Stationen, die Aufwärtsstreckendaten in diesem Zeitsegment senden, eine Länge des Zeitsegmentinformationsfelds oder eine Angabe über das Frame-Ende, EOF.

8. Verfahren nach Anspruch 1, wobei die Aufwärtsstreckendaten, die durch die mehreren Stationen in den mehreren Zeitsegmenten gesendet werden, Folgendes umfassen: erste Aufwärtsstreckendaten, die in einem ersten Zeitsegment durch eine Station gesendet werden, die durch ein erstes Zeitsegmentinformationsfeld angegeben wird, und zweite Aufwärtsstreckendaten, die in einem verbleibenden Zeitsegment durch eine Station gesendet werden, die durch ein verbleibendes Zeitsegmentinformationsfeld angegeben wird.

9. Mehrfachzeitsegment-basierte Ressourcenanzeigevorrichtung (1000), die auf ein drahtloses lokales Netzwerk, WLAN, angewendet wird, und Folgendes umfassend:
eine Basisbandschaltung (1030), die eingerichtet ist, um einen Trigger-Frame zu erzeugen, wobei der Trigger-Frame mehrere Zeitsegmentinformationsfelder trägt und jedes der mehreren Zeitsegmentinformationsfelder gemeinsame Informationen und stationsspezifische Informationen von einer oder mehreren Stationen umfasst; und
eine Hochfrequenzschaltung (1040), die eingerichtet ist, um den Trigger-Frame und einen Bestätigungs-Frame zu senden; wobei
die Hochfrequenzschaltung (1040) weiterhin eingerichtet ist, um eine physikalische Mehrfachzeitsegment-Aufwärtsstrecken-Protokolldateneinheit, PPDU, zu empfangen, wobei die Mehrfachzeitsegment-Aufwärtsstrecken-PPDU Aufwärtsstreckendaten umfasst, die durch mehrere Stationen in mehreren Zeitsegmenten gesendet werden.

10. Vorrichtung nach Anspruch 9, wobei die Zeitsegmentinformationsfelder in dem Trigger-Frame, der durch die Basisbandschaltung (1030) erzeugt wurde, unter Verwendung eines Trennzeichens getrennt sind, und jedes Zeitsegmentinformationsfeld in dem Trigger-Frame einen Medienzugangs-Steuerungskopf, MAC-Kopf, und eine Frame-Prüfsequenz, FCS, umfasst.

11. Vorrichtung nach Anspruch 9, wobei jedes Zeitsegmentinformationsfeld in dem Trigger-Frame, der durch die Basisbandschaltung (1030) erzeugt wurde, eine Frame-Prüfsequenz, FCS, umfasst.

12. Vorrichtung nach einem der Ansprüche 9 bis 11, wobei gemeinsame Informationen eines ersten Zeitsegmentinformationsfelds in dem Trigger-Frame, der durch die Basisbandschaltung (1030) erzeugt wurde, eine Gesamtlänge der Mehrfachzeitsegment-Aufwärtsstrecken-PPDU und eine Länge der Aufwärtsstreckendaten umfassen, die durch eine Station in einem ersten Zeitsegment gesendet wurden; und
gemeinsame Informationen eines anderen Zeitsegmentinformationsfelds als dem ersten Zeitsegmentinformationsfeld in dem Trigger-Frame einen Startpunkt und eine Länge umfassen, die von Aufwärtsstreckendaten sind, die durch eine Station in diesem Zeitsegment gesendet wurden.

13. Vorrichtung nach einem der Ansprüche 9 bis 11, wobei gemeinsame Informationen jedes Zeitsegmentinformationsfelds in dem Trigger-Frame, der durch die Basisbandschaltung (1030) erzeugt wurde, eine Gesamtlänge der Mehrfachzeitsegment-Aufwärtsstrecken-PPDU und einen Startpunkt und eine Länge umfassen, die von den Aufwärtsstreckendaten sind, die durch eine Station in diesem Zeitsegment gesendet wurden.

14. Vorrichtung nach Anspruch 9, wobei der Trigger-Frame, der durch die Basisbandschaltung (1030) erzeugt wurde, weiterhin mindestens einen der folgenden Parameter umfasst: eine Quantität von Zeitsegmentinformationsfeldern oder eine Gesamtlänge der Mehrfachzeitsegment-Aufwärtsstrecken-PPDU.

15. Vorrichtung nach Anspruch 9 oder 14, wobei gemeinsame Informationen jedes Zeitsegmentinformationsfelds in dem Trigger-Frame, der durch die Basisbandschaltung (1030) erzeugt wurde, weiterhin mindestens einen der folgenden Parameter umfasst: eine Quantität von Stationen, die Aufwärtsstreckendaten in diesem Zeitsegment senden, eine Länge des Zeitsegmentinformationsfelds oder eine Angabe über das Frame-Ende, EOF.

## Revendications

1. Procédé d'indication de ressource basé sur de multiples segments de temps, appliqué à un réseau local sans fil (WLAN), le procédé consistant à :
recevoir, par un point d'accès, une trame de déclenchement, la trame de déclenchement transportant une pluralité de champs d'information de segment de temps, chaque champ de la pluralité de champs d'information de segment de temps comprenant une information commune et une information spécifique de station d'une ou plusieurs stations ;
recevoir, par le point d'accès, une unité de données de protocole physique (PPDU) en liaison montante à multiples segments de temps, la PPDU en liaison montante à multiples segments de temps comprenant des données en liaison montante envoyées par une pluralité de stations dans une pluralité de segments de temps ; et
envoyer, par le point d'accès, une trame d'accusé de réception.

2. Procédé selon la revendication 1, dans lequel les champs d'information de segment de temps dans la trame de déclenchement sont séparés au moyen d'un délimiteur et chaque champ d'information de segment de temps dans la trame de déclenchement comprend un en-tête de contrôle d'accès au support (MAC) et une séquence de contrôle de trame (FCS).

3. Procédé selon la revendication 1, dans lequel chaque champ d'information de segment de temps dans la trame de déclenchement comprend une séquence de contrôle de trame (FCS).

4. Procédé selon l'une quelconque des revendications 1 à 3, dans lequel une information commune d'un premier champ d'information de segment de temps dans la trame de déclenchement comprend une longueur totale de la PPDU en liaison montante à multiples segments de temps et une longueur de données en liaison montante envoyées par une station dans un premier segment de temps ; et
une information commune d'un champ d'information de segment de temps autre que le premier champ d'information de segment de temps dans la trame de déclenchement comprend un point de départ et une longueur qui sont de données en liaison montante envoyées par une station dans un segment de temps correspondant au champ d'information de segment de temps autre que le premier champ d'information de segment de temps.

5. Procédé selon l'une quelconque des revendications 1 à 3, dans lequel une information commune de chaque champ d'information de segment de temps dans la trame de déclenchement comprend une longueur totale de la PPDU en liaison montante à multiples segments de temps ainsi qu'un point de départ et une longueur qui sont de données en liaison montante envoyées par une station dans un segment de temps correspondant à chaque champ d'information de segment de temps.

6. Procédé selon la revendication 1, dans lequel la trame de déclenchement comprend en outre au moins un des paramètres suivants : un nombre de champs d'information de segment de temps et une longueur totale de la PPDU en liaison montante à multiples segments de temps.

7. Procédé selon la revendication 1 ou 6, dans lequel une information commune de chaque champ d'information de segment de temps dans la trame de déclenchement comprend au moins un des paramètres suivants : un nombre de stations qui envoient des données en liaison montante dans ce segment de temps, une longueur du champ d'information de segment de temps et une indication de fin de trame (EOF).

8. Procédé selon la revendication 1, dans lequel les données en liaison montante envoyées par la pluralité de stations dans la pluralité de segments de temps comprennent : des premières données en liaison montante envoyées dans un premier segment de temps par une station indiquée par un premier champ d'information de segment de temps et des secondes données en liaison montante envoyées dans un segment de temps restant par une station indiquée par un champ d'information de segment de temps restant.

9. Appareil d'indication de ressource basé sur de multiples segments de temps (1000), appliqué à un réseau local sans fil (WLAN), et comprenant :
un circuit en bande de base (1030), configuré pour générer une trame de déclenchement, la trame de déclenchement transportant une pluralité de champs d'information de segment de temps, chaque champ de la pluralité de champs d'information de segment de temps comprenant une information commune et une information spécifique de station d'une ou plusieurs stations ; et
un circuit radioélectrique (1040), configuré pour envoyer la trame de déclenchement et une trame d'accusé de réception ;
le circuit radioélectrique (1040) étant en outre configuré pour recevoir une unité de données de protocole physique (PPDU) en liaison montante à multiples segments de temps, la PPDU en liaison montante à multiples segments de temps comprenant des données en liaison montante envoyées par une pluralité de stations dans une pluralité de segments de temps.

10. Appareil selon la revendication 9, dans lequel les champs d'information de segment de temps dans la trame de déclenchement générée par le circuit en bande de base (1030) sont séparés au moyen d'un délimiteur et chaque champ d'information de segment de temps dans la trame de déclenchement comprend un en-tête de contrôle d'accès au support (MAC) et une séquence de contrôle de trame (FCS).

11. Appareil selon la revendication 9, dans lequel chaque champ d'information de segment de temps dans la trame de déclenchement générée par le circuit en bande de base (1030) comprend une séquence de contrôle de trame (FCS).

12. Appareil selon l'une quelconque des revendications 9 à 11, dans lequel une information commune d'un premier champ d'information de segment de temps dans la trame de déclenchement générée par le circuit en bande de base (1030) comprend une longueur totale de la PPDU en liaison montante à multiples segments de temps et une longueur de données en liaison montante envoyées par une station dans un premier segment de temps ; et
une information commune d'un champ d'information de segment de temps autre que le premier champ d'information de segment de temps dans la trame de déclenchement comprend un point de départ et une longueur qui sont de données en liaison montante envoyées par une station dans ce segment de temps.

13. Appareil selon l'une quelconque des revendications 9 à 11, dans lequel une information commune de chaque champ d'information de segment de temps dans la trame de déclenchement générée par le circuit en bande de base (1030) comprend une longueur totale de la PPDU en liaison montante à multiples segments de temps ainsi qu'un point de départ et une longueur qui sont de données en liaison montante envoyées par une station dans ce segment de temps.

14. Appareil selon la revendication 9, dans lequel la trame de déclenchement générée par le circuit en bande de base (1030) comprend en outre au moins un des paramètres suivants : un nombre de champs d'information de segment de temps et une longueur totale de la PPDU en liaison montante à multiples segments de temps.

15. Appareil selon la revendication 9 ou 14, dans lequel une information commune de chaque champ d'information de segment de temps dans la trame de déclenchement générée par le circuit en bande de base (1030) comprend au moins un des paramètres suivants : un nombre de stations qui envoient des données en liaison montante dans ce segment de temps, une longueur du champ d'information de segment de temps et une indication de fin de trame (EOF).
